# EUROPÄISCHE PATENTSCHRIFT

(11) **EP 3 205 884 B1**
(45) Veröffentlichungstag und Bekanntmachung des Hinweises auf die Patenterteilung: **11.11.2020**
(21) Anmeldenummer: 16155415.9
(22) Anmeldetag: 12.02.2016
(51) Int. Cl.: F04D 17/16, F03G 3/08, F04D 1/12

(54) **SELBSTPUMPENDES VAKUUM-ROTORSYSTEM**
SELF-PUMPING VACUUM ROTOR SYSTEM
SYSTÈME DE ROTOR À VIDE AUTO-POMPANT

(43) Veröffentlichungstag der Anmeldung: 16.08.2017
(73) Patentinhaber: Enrichment Technology Company Ltd. Zweigniederlassung Deutschland, 52409 Jülich (DE)
(72) Erfinder: Reischl, Hubert, 48599 Gronau (DE); Zimmermann, Edwin, 52223 Stolberg (DE)
(74) Vertreter: FARAGO Patentanwälte

(56) Entgegenhaltungen:
- EP-A1- 2 698 557
- EP-A2- 2 730 782
- JP-A- S50 148 973
- JP-U- S5 376 372
- DATABASE WPI Week 199437 Thomson Scientific, London, GB; AN 1994-300620 XP002761317, & RU 1 433 133 C (MACH CONS BUR) 15. März 1994 (1994-03-15)

## Beschreibung

### Gebiet der Erfindung

Die Erfindung betrifft ein Vakuum-Rotorsystem, das aufgrund seiner Anordnung selbstpumpend ausgestaltet ist und ein Verfahren zum Betreiben dieses Vakuum-Rotorsystems.

### Hintergrund der Erfindung

Rotoren sind drehende (rotierende) Teile einer Maschine oder eines Aggregats. Häufig werden Rotoren als sogenannte Schwungräder zur Energiespeicherung kinetischer Energie (Rotationsenergie und Massenträgheit) eingesetzt, indem seine Drehbewegung (Rotation) mit möglichst wenig Reibungsverlust zur Verwendung im Bedarfsfall gespeichert wird. Außerdem werden Schwungräder auch zur Stabilisierung von Satelliten oder Flugzeugen eingesetzt.

Bei Schwungrädern für die Energiespeicherung (Schwungradenergiespeicher) kann elektrische Energie in den rotierenden Schwungrädern in Form von Rotationsenergie gespeichert und bei Bedarf wieder zurück in elektrische Energie umgewandelt und an einen Verbraucher abgegeben werden. Derartige Schwungrad-Energiespeicher haben größtenteils einen Hohlzylinder als Rotor, der entsprechend seiner Drehzahl und Masse eine bestimmte Menge an Energie speichert. Die Speicherkapazität eines solchen Energiespeichers ist durch seine maximale Drehzahl begrenzt. Aus der Formel zur Berechnung des Energiegehalts eines Rotationskörpers (Rotors) ergibt sich, dass der Rotationskörper (Rotor) mit hohem Energiegehalt vorrangig auf hohe Drehzahl ausgelegt werden sollte als auf hohe Masse. Rotoren von Schwungradspeichereinheiten können je nach Ladezustand mit Drehzahl zum Beispiel von 50.000 Umdrehungen pro Minute rotieren. Ein typischer Drehzahlbereich liegt zwischen 15000 Umdrehungen pro Minute und der maximalen Drehzahl. Damit die Rotoren der Schwungradspeicher möglichst verlustarm rotieren und damit die Energie möglichst verlustarm speichern können, sind sie von einem Maschinengehäuse umschlossen, wobei möglichst niedriger Druck erzeugt wird. Je geringer der Druck und die Dichte des Gases im Rotorgehäuse sind, desto geringer sind die Reibungsverluste des Rotors am Füllgas des Maschinengehäuses. Daher wird das Gehäuse in der Regel evakuiert. Zur Erzeugung eines für den effektiven verlustarmen Betrieb der Schwungräder benötigten Mindestvakuums in den jeweiligen Schwungradenergiespeichern wird für jedes Schwungrad ein Pumpsystem aus einer Vorpumpe (z.B. eine Drehschieberpumpe) und Hauptpumpe (z.B. eine Turbomolekularpumpe) verwendet, das Betriebsdrücke von 10⁻³ mbar oder weniger sicherstellt. Während eine einzelne Vorpumpe über ein geeignet ausgestaltetes Rohrsystem, an das alle Schwungradenergiespeicher eines Energiespeichers mit mehreren Schwungrädern angeschlossen sind, das Vorvakuum für alle Schwungräder erzeugen kann, müssen dennoch individuelle Hauptpumpen jeweils direkt an den Maschinengehäusen angeschlossen sein, um das benötigte Betriebsvakuum in dem Maschinengehäusen für jedes Schwungrad (Rotor) zu erzeugen. Als Hauptpumpen werden dazu in der Regel Turbomolekularpumpen verwendet. Turbomolekularpumpen sind teure Komponenten und aufwendig Instand zuhaltende Komponenten. Bei einem Energiespeicher mit einer Vielzahl an parallel betriebenen Schwungrädern, beispielsweise 32 Schwungräder in einem solchen Speicher, muss zudem eine entsprechende Anzahl an Turbomolekularpumpen verwendet werden, was den Anlagenpreis stark erhöht. Außerdem muss beim Betrieb solcher Energiespeicher mit sich von den Rotoren lösenden Partikeln und Schmutz gerechnet werden. Turbomolekularpumpen sind aber sehr partikel- und schmutzempfindlich, was die Ausfallwahrscheinlichkeit einer solchen Anlage erhöht. Weiter bedarf es großer Saugquerschnitte, wenn Turbomolekularpumpen Verwendung finden. Große Öffnungen, die auch noch ungünstig angebracht sind, stellen ein erheblich höheres Risiko für Gas- und Staubaustritt im Falle eines sogenannten Rotorabsturzes (oder Rotor-Crash) dar.

RU 1 433 133 C offenbart eine Schöpfpumpe zum Umpumpen von Gasen mit einem in einem Maschinengehäuse angeordneten und auf einem Schaft einseitig gelagerten rotierenden Pumpengehäuse, in dessen Inneren ein Schöpfer mit Zufuhrkanal zum Zuführen des zu pumpenden Gases und ein Abfuhrkanal zur Abfuhr des mittels Schöpfer verdichteten zu pumpenden Gases angeordnet ist. Das Maschinengehäuse ist dabei über Molekularstufen gegenüber dem Inneren des Pumpengehäuses so abgedichtet, dass eine Gaseinströmung in den Raum zwischen Maschinengehäuse und Pumpengehäuse verhindert wird.

EP 2 698 557 A1 offenbart eine Nabe für Rotoren für Schwungrad-Energiespeicher sowie einen Rotor mit einer solchen Nabe und einen Schwungrad-Energiespeicher mit einem solchen Rotor sowie ein Verfahren zur Herstellung einer solchen Nabe.

EP 2 730 782 A2 offenbart eine Vorrichtung zur kinetischen Energiespeicherung mit wenigstens einer in einem Motor- und/oder einem Generatorbetrieb betreibbaren Elektromaschine, wobei zur Zwischenspeicherung einer anfallenden Bewegungsenergie zumindest ein Energierückgewinnungssystem vorgesehen ist, welches Bewegungsenergie in elektrische Energie umwandelt, wobei das Energierückgewinnungssystem wenigstens einen Schwungmassenkörper, der als Rotor ausgebildet ist, und einen in einem Gehäuse angeordneten Stator aufweist, wobei der Rotor und der Stator als wenigstens eine Vakuumpumpstufe ausgebildet sind. Weitere ähnliche Vakuum-Rotorsysteme sind aus JP S 5376372 U und JP S 50148973 bekannt.

Schwungradspeicher konkurrieren im Energiespeichermarkt mit anderen Speichertechnologien wie beispielsweise Batteriespeicher. Daher ist ein möglichst kostengünstig herzustellender und dennoch effektiv, verlustarm und zuverlässig mit geringem Wartungsaufwand zu betreibender Schwungradenergiespeicher möglichst kostengünstig herzustellender und dennoch effektiv, verlustarm und zuverlässig mit geringem Wartungsaufwand zu betreibender Schwungradenergiespeicher wünschenswert.

### Zusammenfassung der Erfindung

Es ist daher eine Aufgabe der Erfindung, einen Schwungradenergiespeicher zur Verfügung zu stellen, der kostengünstig hergestellt sowie effektiv, verlustarm, zuverlässig und mit geringem Wartungsaufwand betrieben werden kann.

Diese Aufgabe wird gelöst durch ein Vakuum-Rotorsystem umfassend einen hohlförmigen Rotor mit einer zu beiden Enden senkrecht zur Rotationsfläche offenen Rotormantelfläche und mindestens zwei innerhalb der Rotormantelfläche mit deren Innenseite verbundenen Naben, die in entsprechenden Lagern zur Rotation des Rotors geeignet gelagert sind, ein den Rotor umschließendes Maschinengehäuse mit mindestens einer Gasauslassöffnung zum Auslassen von Gasen aus dem Maschinengehäuse heraus, ein mit der Gasauslassöffnung verbundenes Vakuumsystem mit mindestens einer Vorpumpe zur Erzeugung eines Vorvakuumdrucks im Maschinengehäuse sowie mindestens eine im Maschinengehäuse zwischen der Nabe und dem dazugehörigen offenen Ende der Rotormantelfläche in einem geeigneten Abstand zu deren Innenseite berührungsfrei zur Rotormantelfläche zur effektiven Aufnahme von Gas angeordnete und mit der Gasauslassöffnung zur Abfuhr des aufgenommenen Gases verbunden erste Gasentnahmevorrichtung mit einer Gasaufnahmeöffnung, die so angeordnet ist, dass der Rotor bei einer Drehfrequenz größer 200Hz selbst einen Teil des sich durch die Rotordrehung entlang der Innenseite der Rotormantelfläche bewegenden Gasstroms zumindest in die erste Gasentnahmevorrichtung fördert und somit selbst einen Gasdruck im Maschinengehäuse vom Vorvakuumdruck auf einen geringeren Betriebsvakuumdruck reduzieren kann.

Das erfindungsgemäße Vakuum-Rotorsysteme wird beispielsweise in Schwungradenergiespeichern verwendet. Um den Energiegehalt eines Schwungradenergiespeichers zu maximieren, wird der Rotor des Vakuum-Rotorsystems bei geringem Eigengewicht auf maximale Drehzahl gebracht, da für den maximalen Energiegehalt die Drehzahl quadratisch, dagegen das Gewicht nur linear eingeht. Der Rotor (oder auch Rotationskörper) ist dabei mit zwei oder mehr Naben mit den Lager- und Antriebselementen des Schwungradenergiespeichers verbunden. Die Naben haben dabei einerseits eine Verbindung und Fixierung der Rotormantelfläche mit den Lager- und Antriebselementen herzustellen und andererseits für die Übertragung der Torsionsmomente von einer Antriebswelle auf die Rotormantelfläche und umgekehrt zu sorgen. Die Naben zeichnen sich dadurch aus, dass sie mechanisch ausreichend stark belastbar und damit zuverlässig ist, um den radialen und tangentialen Belastungen bei sehr hohen Drehzahlen von mehr als 50000 U/min aufgrund der auf den Rotormantelfläche wirkenden Fliehkräfte standzuhalten und die Gewichtsbelastung durch die Rotormantelfläche zu tragen. Die Nominal-Drehfrequenzen der Rotoren in Schwungradenergiespeicheranwendungen liegen beispielsweise im Bereich von 750 Hz, wobei sich die Drehfrequenzen bei der Energieaufnahme erhöhen und bei der Energieabnahme verringern. Rotormantelfläche und Naben werden dabei beispielsweise aus CFK-Laminat hergestellt. Ein solches Material ist ausreichend robust und besitzt ein günstiges Crashverhalten für den Fall eines Absturzes des Rotors im Schwungradenergiespeicher und ein geringes Gewicht, was eine einfachere Lagerung des Rotors ermöglicht. Die Naben können je nach Ausführungsform dabei separat voreinander über Zapfen in den jeweiligen Lager gelagert sein oder mit einem durchgehenden Schaft verbunden sein, deren beide gegenüberliegenden Enden dann in den jeweiligen Lagern gelagert sind. Die Rotoren des Vakuum-Rotorsystems beziehungsweise des Schwungradenergiespeichers werden von einem Maschinegehäuse aus Sicherheitsgründen und zur Erzeugung eines Betriebsvakuums umschlossen. Geeignete Maschinengehäuse werden beispielsweise aus Stahl mit einer Wandstärke ausreichend zur Kompensation der Absturzlasten der Rotoren hergestellt. Der Fachmann kann die benötigten Mindestwandstärken aus der Rotationsenergie des Rotors berechnen.

Damit der Rotor des jeweiligen Vakuum-Rotorsystems in einem Schwungradenergiespeicher möglichst verlustarm rotieren und damit die Energie möglichst verlustarm speichern kann, wird das den Rotor umschließende Maschinengehäuse durch das Vakuumsystem unter Benutzung einer oder mehrerer Vorpumpe, beispielsweise Drehschieberpumpen, auf einen Vorvakuumdruck beispielsweise in der Größenordnung von 10⁻² mbar heruntergepumpt. Dieser Druck ist allerdings für einen langfristigen reibungsarmen und daher verlustarmen Betrieb der Rotoren beziehungsweise des Schwungradenergiespeichers nicht ausreichend niedrig genug. Je geringer der Druck und die Dichte des Gases im Maschinengehäuse sind, desto geringer sind die Reibungsverluste des Rotors am Restgas im Maschinengehäuse. Das vorliegende erfindungsgemäße System ist vorteilhafterweise dafür geeignet, den Vorvakuumdruck um mindestens eine Größenordnung aufgrund der selbstpumpenden Wirkung des Rotors mit Hilfe von erfindungsgemäß geeignet angeordneten Gasentnahmevorrichtungen weiter zu reduzieren, sodass Drücke von 10⁻³ mbar oder weniger als Betriebsvakuum unter Vermeidung des Einsatzes von Hauptpumpen wie beispielsweise Turbopumpen sicherstellt werden können.

Durch die Rotation des Rotors wird das sich innerhalb des Maschinegehäuses befindliche Gas über Reibungseffekte am Rotor ebenfalls in Rotation versetzt. Während zwischen der Rotormantelfläche in dem Maschinegehäuse nur ein geringer Spalt existiert, besitzt den hohlförmige Rotor einen dazu großen Durchmesser innerhalb der Rotormantelfläche, sodass sich der wesentliche Teil des sich im Maschinengehäuses befindlichen Gases innerhalb des Rotors beziehungsweise innerhalb des durch die sich drehende Rotormantelfläche definierten Volumens befindet. Das entsprechende rotierende Gas, wird aufgrund der Fliehkraft an die Innenseite der Rotormantelfläche gedrückt und läuft mit der rotierenden Rotormantelfläche um die Rotationsachse des Rotor herum. Durch die Fliehkräfte wird eine Druckverteilung mit einem Druckgradienten entlang des Radius der Rotormantelfläche erzeugt, wobei der Druck in radialer Richtung gesehen direkt auf der Innenfläche der Rotormantelfläche am größten und an der Rotationsachse am kleinesten ist. Platziert man nun eine Gasentnahmevorrichtung in der Nähe der Innenseite der Rotormantelfläche, deren Gasentnahmeoberfläche senkrecht in Richtung zugewandt dem Gasstrom, der mit der rotierenden Rotormantelfläche mitrotiert, ausgerichtet ist, so kann mit dieser Gasentnahmeöffnung das rotierende Gas besonders effektiv abgeführt werden, da nahe der Innenfläche der Rotormantelfläche der höchste Druck innerhalb des Rotors herrscht. Dasselbe Prinzip würde zwar auch an anderen Positionen innerhalb der Rotormantelfläche zur Aufnahme von Gas durch die Gasentnahmeöffnung führen, allerdings aufgrund des dort niedrigeren Drucks (radialer Druckgradient) wäre die resultierende Pumpleistung durch Rotordrehung und Gasentnahme an anderen Punkten dichter zur Rotationsachse deutlich ineffektiver. Der geeignete Abstand ist ein Kompromiss zwischen einem Mindestabstand, um ungewünschte Berührungen zwischen Gasentnahmevorrichtung und der Innenseiten der Rotormantelfläche unbedingt zu vermeiden, da bei den vorgesehenen Rotationsfrequenzen des Rotors eine solche Berührung zur Zerstörung der Gasentnahmevorrichtung und gegebenenfalls auch der Rotormantelfläche führen würde, und dem Wunsch, im Idealfall direkt auf der Innenseite der Rotormantelfläche das Gas im Rotor bei höchstem lokalen Druck aus dem Maschinengehäuse heraus zu fördern.

In einer Ausführungsform beträgt daher der Abstand zwischen der Gasaufnahmeöffnung der ersten Gasentnahmevorrichtung und der Rotormantelfläche weniger als 10% des Radius des Rotors an dieser Stelle. Bei zylinderförmigen Rotormantelflächen ist der Radius an dieser Stelle der allgemeine ortsunabhängige Radius der Rotormantelfläche. Bei anders geformten Rotormantelflächen bezeichnet obiger Radius den Radius, den die Rotormantelfläche senkrecht zur Rotationsachse am Ort der Gasentnahmevorrichtung besitzt. In einer bevorzugten Ausführungsform beträgt der Abstand zwischen Gasentnahmeöffnung und Innenseite der Rotormantelfläche zwischen 1 und 5% des Radius des Rotors an dieser Stelle.

Als Gasentnahmevorrichtung können unterschiedlich geformte und ausgeführte Vorrichtungen verwendet werden, die einen für Gase offenen Kanal zwischen Gasentnahmeöffnung und Gasauslassöffnung bereitstellen. Hierbei können eine oder mehrere Gasentnahmevorrichtungen an dieselbe Gasauslassöffnung angeschlossen sein, sofern die Rotor- und Lagerausgestaltung eine Anordnung mehrere Gasentnahmevorrichtungen auf derselben Seite des Rotors beziehungsweise der Nabe zulassen. Das Material der Gasentnahmevorrichtung sollte aus einem vakuumtauglichen Material bestehen, das beispielsweise eine geringe oder vernachlässigbare Eigenausgasung zeigt. Beispielsweise können als Gasentnahmevorrichtungen Rohrverbindungen verwendet werden, die sich in radialer Richtung von der Gasauslassöffnung hin zur Rotormantelfläche erstrecken und vor Erreichen der Rotormantelfläche eine Krümmung aufweisen, sodass die offene Rohröffnung in dem Gasstrom entlang der Innenseite der Rohrmantelfläche hineinzeigt, wobei die Gasentnahmefläche die Fläche bezeichnet, die senkrecht zum Gasstrom ausgerichtet ist. Die Gasentnahmeöffnung kann dabei unterschiedliche Formen besitzen, beispielsweis runde, oval oder elliptische Formen. Zu kantige Formen können aufgrund von davon verursachten Verwirbelungen im Gasstrom ungeeignet sein. Die Gasauslassöffnung bezeichnet dabei die Öffnung im Maschinengehäuse, durch die das Gas im Maschinegehäuse direkt abgepumpt worden wäre, wenn nicht die Gasentnahmevorrichtung mit der Gasauslassöffnung verbunden wäre. Mit Gasentnahmevorrichtung wird das durch sie bereits entnommene Gas durch die Gasauslassöffnung nur nach außerhalb des Maschinengehäuses transportiert.

Durch diese Erfindung wird die Schmutz- und Partikelverträglichkeit des Vakuum-Rotorsystems erheblich gesteigert, da keine darauf empfindlichen Turbopumpen mehr benötigt werden. Dadurch wird das Vakuum-Rotorsystem äußerst wartungsfreundlich und zuverlässig. Die Vermeidung von Turbopumpen senkt zudem die Komponentenkosten des Gesamtsystems erheblich. Dennoch kann mit dem erfindungsgemäßen System mindestens der geforderte Betriebsdruck erzeugt werden, sodass das Vakuum-Rotorsystem weiterhin sehr verlustarm und effektive betrieben werden kann. Durch diese Erfindung wird ferner die Flexibilität des Vakuum-Rotorsystems erheblich gesteigert. Die Gasentnahmevorrichtungen können aufhängungsnah oder ständernah (in paralleler Richtung zur Rotationsachse gesehen) angebracht werden, wodurch die Gefahr des Austretens von Gasen und Stäuben im Absturzfalle durch höhere Stabilität und reduzierte Querschnitte erheblich reduziert wird.

Mit dieser Erfindung wird daher ein Vakuum-Rotorsystem für Schwungradenergiespeicher zur Verfügung gestellt, mit dem beispielsweise ein Schwungradenergiespeicher kostengünstig hergestellt sowie effektiv, verlustarm, zuverlässig und mit geringem Wartungsaufwand betrieben werden kann.

In einer Ausführungsform umfasst die Gasaufnahmeöffnung eine effektive Gasaufnahmefläche mit einem mittleren Durchmesser und ist senkrecht zum Gasstrom entlang der Rotormantelfläche ausgerichtet. Bei einer senkrechten Ausrichtung zum Gasstrom ist die Gasaufnehme durch die Gasentnahmeöffnung maximal. Der mittlere Durchmesser bezeichnet hierbei den aus den Abständen aller Punkte auf dem Rand der Gasentnahmeöffnung zu ihrem geometrischen Mittelpunkt gemittelten Wert. Bei einem Kreis ist der Radius für alle Punkte auf dem Rand bekanntermaßen gleich, sodass der mittlere Radius eines Kreises gleich dem Kreisradius ist. Bei Flächen abweichend von einer Kreisform können sich andere mittlere Durchmesser ergeben.

In einer Ausführungsform ist die erste Gasentnahmevorrichtung innerhalb der Rotormantelfläche in einer Distanz zum offenen Ende der Rotormantelfläche angeordnet, die mindestens das Dreifache des mittleren Durchmessers beträgt. Dieser Abstand vermeidet eine reduzierte Gasentnahme durch die Gasentnahmeöffnung hindurch aufgrund von Verwirbelungs- oder Abfließeffekten an den offenen Enden der Rotormantelfläche. In obiger spezifizierter Distanz oder bei größeren Abständen ist die Gasströmung beruhigt und daher für die Gasentnahme am besten geeignet. Solange die obige Mindestdistanz eingehalten wird, kann die Distanz ansonsten beliebig gewählt werden.

In einer weiteren Ausführungsform beträgt der mittlere Durchmesser zwischen 3% und 10% des Radius des Rotors an dieser Stelle. Gasentnahmeflächen mit einer solchen Größe besitzen die größte Gasentnahmekapazität. Kleinere Öffnungen würden weniger Gas aus dem Maschinegehäuse heraus fördern. Größere Öffnungen würden den Gasstrom zu stark stören, was ebenfalls die Gasentnahme negativ beeinflusst.

In einer weiteren Ausführungsform besitzt die erste Gasentnahmevorrichtung einen Querschnitt parallel zum Gasstroms entlang der Innenseiten der Rotormantelfläche, der geeignet ist, um Verwirbelungen des Gasstroms durch die erste Gasentnahmevorrichtung zu minimieren. Auch diese Verwirbelungen sollten vermieden oder minimiert wurden, weil auch diese zu einer Reduzierung der Gasentnahme führen würden. In einer bevorzugten Ausführungsform ist der Querschnitt daher rund oder oval.

In einer weiteren Ausführungsform ist mindestens eine zweite Gasentnahmevorrichtung zwischen der anderen Nabe als bei der ersten Gasentnahmevorrichtung und einem entsprechend zu dieser anderen Nabe zugehörigen Ende der Rotormantelfläche in einem geeigneten Abstand zur Innenseite der Rotormantelfläche berührungsfrei zur Rotormantelfläche zur Aufnahme von Gas angeordnete. Durch diese zweite (und gegebenenfalls mehrere zweite) Gasentnahmevorrichtung kann auch auf der anderen Seite des Rotors und damit auf der anderen Seite der ersten Gasentnahmevorrichtung Gas aus dem Maschinegehäuse oder aus dem offenen Ende des Rotors heraus gefördert werden, was den Betriebsdruck weiter verbessert.

In einer Ausführungsform dazu definieren die Naben im hohlförmigen Rotor ein Zwischenvolumen zwischen den Naben, und die zweite Gasentnahmevorrichtung ist dabei so angeordnet, dass das aufgenommene Gas in das Zwischenvolumen gefördert wird. Somit wird das Gas aus dem Bereich des Rotors entnommen, der in Verbindung mit dem Spalt zwischen Rotormantelfläche und Maschinegehäuse steht. Somit wird der Gasdruck zumindest im Spalt gesenkt, was die Reibungsverluste beim Betreiben des Rotors weiter vermindert. Sobald die Drehfrequenz des Rotors nachlässt, kann das im Zwischenvolumen zwischengespeichert Gas allerdings wieder in den anderen Rotorbereich entweichen. Diese Lösung stellt somit nur eine temporäre Zwischenspeicherung zur temporären Verminderung von Reibungsverlusten dar.

In einer weiteren Ausführungsform sind die Naben gasundurchlässig zur Bildung eines gasdichten Zwischenvolumens ausgestaltet. Damit wird das zwischengespeichert Gas temporär sicher aufgenommen. In einer bevorzugten Ausführungsform ist auf der Innenseite des Zwischenvolumens zumindest teilweise eine gasabsorbierende Schicht angeordnet. Diese gasabsorbierende Schicht bindet Gas dauerhaft oder stellt einen größeren Puffer dar, was den Betriebsdruck im Maschinengehäuse dauerhaft oder für längere Zeiten senkt. Geeignete adhäsive Schichten sind beispielsweise Schichten aus Aktivkohle oder aus natürlichen oder synthetischen Zeolithen oder anderer Stoffe, die auch als Molekularsieb oder Molsieb bezeichnet werden. Molekularsiebe weisen eine große innere Oberfläche (beispielsweise 600-700 m²/g) auf und haben einheitliche Porendurchmesser, die in der Größenordnung der Durchmesser von Molekülen liegen und zeichnen sich somit durch eine hohe Adsorptionskapazität für Gase aus.

In einer Ausführungsform ist die der zweiten Gasentnahmevorrichtung zugewandte Nabe gasundurchlässig und ist die der ersten Gasentnahmevorrichtung zugewandte Nabe zumindest teilweise gasdurchlässig ausgestaltet, sodass das durch die zweite Gasentnahmevorrichtung in das Zwischenvolumen geförderte Gas durch die gasdurchlässig Nabe in Richtung der ersten Gasentnahmevorrichtung entweichen kann. Die zweite Gasentnahmevorrichtung fördert Gas vom anderen offenen Ende der Rotormantelfläche in das Zwischenvolumen und sorgt somit im Zwischenvolumen für einen Druckanstieg, sodass der Druck im Zwischenvolumen höher ist als außerhalb der Naben. Daher tritt Gas aus dem Zwischenvolumen durch die gasdurchlässige Nabe in Richtung der ersten Gasentnahmevorrichtung aus und kann von dieser aus dem Maschinegehäuse heraus gefördert werden, was den Betriebsdruck weiter senkt. Es wird auch das Abpumpen der zwischengespeicherten Gasmenge bei niedriger Drehzahl verbessert. Die Gasdurchlässigkeit der ersten (unteren) Nabe kann durch ein entsprechendes gaspermeables Material oder durch gasdurchlässige Passagen, beispielsweise Aussparungen, bereitgestellt werden. In einer bevorzugten Ausführungsform umfasst die gasdurchlässige Nabe (erste oder untere Nabe) eine symmetrische Anordnung von Löchern zur Herstellung der Gasdurchlässigkeit. Die symmetrische Anordnung soll Unwuchten bei der Rotation der Naben vermieden. Löcher stellen dabei eine sehr präzise vorhersagbare Gasdurchlassfähigkeit im Vergleich zu gaspermeablen Materialien bereit.

In einer weiteren Ausführungsform ist die zweite Gasentnahmevorrichtung direkt mit der Gasauslassöffnung zur Abfuhr des durch die zweite Gasentnahmevorrichtung aufgenommenen Gases verbunden. Dadurch können die mit der zweiten Gasentnahmevorrichtung geförderten Gase direkt aus dem Maschinegehäuse befördert werden, ohne dass Zwischenvolumen und Gasdurchlässigkeiten einen Einfluss auf den Gasfluss nach außen haben. In einer bevorzugten Ausführungsform ist die direkte Verbindung zwischen zweiter Gasentnahmevorrichtung und Gasauslassöffnung durch einen die beiden Naben verbindenden Schaft geführt. Durch eine Bohrung durch den vorhandenen Schaft hindurch kann ein Gaskanal zum Abtransport des geförderten Gases bereitgestellt werden, ohne dass zusätzliche Komponenten in den Rotor eingeführt werden müssen.

In einer weiteren Ausführungsform umfasst das Vakuum-Rotorsystem eine weitere Gasauslassöffnung an der der anderen Gasauslassöffnung gegenüberliegenden Seite des Maschinengehäuses, die zweite Gasentnahmevorrichtung ist dabei zur Abfuhr des durch sie aufgenommenen Gases mit der weiteren Gasaufnahmeöffnung verbunden, die wiederum an das Vorvakuumsystem angeschlossen ist. Mit dieser Ausführungsform können die durch die zweiten Gasentnahmevorrichtung aufgenommenen Gase auf kürzestem Weg aus dem Maschinengehäuse heraus gefördert werden, was vakuumtechnisch den geringsten Pumpwiderstand darstellt, allerdings einen höheren Aufwand bei der Ausgestaltung des Vakuumsystems bedeutet.

In einer weiteren Ausführungsform besitzt die zweite Gasentnahmevorrichtung eine Ausgestaltung, die der Ausgestaltung der ersten Gasentnahmevorrichtung gemäß einem oder mehrerer voranstehend aufgeführten Ausführungsformengemäß entspricht. Die zweite Gasentnahmevorrichtung kann beispielsweise identisch zu ersten Gasentnahmevorrichtung ausgeführt sein, wobei deren lokale Anordnung allerdings die Gegebenheiten im Bereich der anderen Nabe und dem anderen Lager zu berücksichtigen hat.

Die Erfindung betrifft des Weiteren einen Schwungradenergiespeicher umfassend eine Mehrzahl an erfindungsgemäßen Vakuum-Rotorsystemen, wobei das Vakuumsystem eines jeden Vakuum-Rotorsystems zur Erzeugung eines Vorvakuumdrucks in jedem der Maschinegehäuse zu einem gemeinsamen Energiespeicher-Vakuumsystem mit mindestens einer Vorvakuumpumpe zusammengeschlossen ist, das den Vorvakuumdruck in jedem Maschinengehäuse bereitstellt. Das Betriebsvakuum wird dann in jedem Maschinengehäuse durch den drehenden Rotor selber hergestellt, indem die jeweiligen Rotoren bei Drehfrequenzen größer 200Hz selbst einen Teil der sich durch die Rotordrehung entlang der Innenseite der Rotormantelflächen bewegenden Gasströme zumindest in die jeweilige erste Gasentnahmevorrichtung fördern und somit selbst einen Gasdruck in den jeweiligen Maschinengehäusen vom Vorvakuumdruck auf geringere Betriebsvakuumdrücke reduzieren können. Die Nominal-Drehfrequenzen der Rotoren in Schwungradenergiespeicheranwendungen liegen beispielsweise im Bereich von 750 Hz, wobei sich die Drehfrequenzen bei der Energieaufnahme erhöhen und bei der Energieabnahme verringern.

Die Erfindung betrifft des Weiteren ein Verfahren zum Betrieben des erfindungsgemäßen Vakuum-Rotorsystems mit einem hohlförmigen Rotor mit einer zu beiden Enden senkrecht zur Rotationsachse offenen Rotormantelfläche und mindestens zwei innerhalb der Rotormantelfläche mit deren Innenseite verbundenen Naben, die in entsprechenden Lagern zur Rotation des Rotors geeignet gelagert sind, und mit einem den Rotor umschließenden Maschinengehäuse mit mindestens einer Gasauslassöffnung zum Auslassen von Gasen aus dem Maschinengehäuse heraus, umfassend die Schritte:
- Erzeugen eines Vorvakuumdrucks im Maschinengehäuse mit einem mit der Gasauslassöffnung verbundenen Vakuumsystem mit mindestens einer Vorpumpe; und
- Reduzieren des Drucks im Maschinengehäuse von dem Vorvakuumdruck auf einen geringeren Betriebsvakuumdruck durch den Rotor selbst, indem mindestens eine erste Gasentnahmevorrichtung mit einer Gasaufnahmeöffnung zur effektiven Aufnahme von Gas im Maschinengehäuse zwischen der Nabe und dem dazugehörigen offenen Ende der Rotormantelfläche in einem geeigneten Abstand zu deren Innenseite berührungsfrei zur Rotormantelfläche angeordnet ist und mit der Gasauslassöffnung zur Abfuhr des aufgenommenen Gases verbunden ist, wobei der Rotor bei einer Drehfrequenz größer 200Hz selbst einen Teil des sich durch die Rotordrehung entlang der Innenseite der Rotormantelfläche bewegenden Gasstroms zumindest in die erste Gasentnahmevorrichtung fördert.

### Kurze Beschreibung der Abbildungen

Diese und andere Aspekte der Erfindung werden im Detail in den Abbildungen wie folgt gezeigt.
- Fig.1:: eine Ausführungsform des erfindungsgemäßen Vakuum-Rotorsystems im seitlichen Schnitt;
- Fig.2:: die eine Ausführungsform des erfindungsgemäßen Vakuum-Rotorsystems gemäß Fig.1 als Vergrößerung für den Rotor im Bereich der unteren Nabe;
- Fig.3:: eine weitere Ausführungsform des erfindungsgemäßen Vakuum-Rotorsystems im seitlichen Schnitt mit zusätzlicher zweiter Gasentnahmevorrichtung;
- Fig.4:: eine weitere Ausführungsform des erfindungsgemäßen Vakuum-Rotorsystems im seitlichen Schnitt mit zusätzlicher zweiter Gasentnahmevorrichtung mit direkter Gasverbindung zur Gasauslassöffnung der ersten Gasentnahmevorrichtung;
- Fig.5:: eine weitere Ausführungsform des erfindungsgemäßen Vakuum-Rotorsystems gemäß Fig.3 als Vergrößerung für den Rotor im Bereich der unteren, hier gasdurchlässigen Nabe;
- Fig.6:: eine weitere Ausführungsform des erfindungsgemäßen Vakuum-Rotorsystems im seitlichen Schnitt mit zusätzlicher zweiter Gasentnahmevorrichtung und direktem Anschluss an eine zweite Gasauslassöffnung;
- Fig.7:: eine Ausführungsform des erfindungsgemäßen Verfahrens zum Betreiben des Vakuum-Rotorsystems.

### Detaillierte Beschreibung der Ausführungsbeispiele

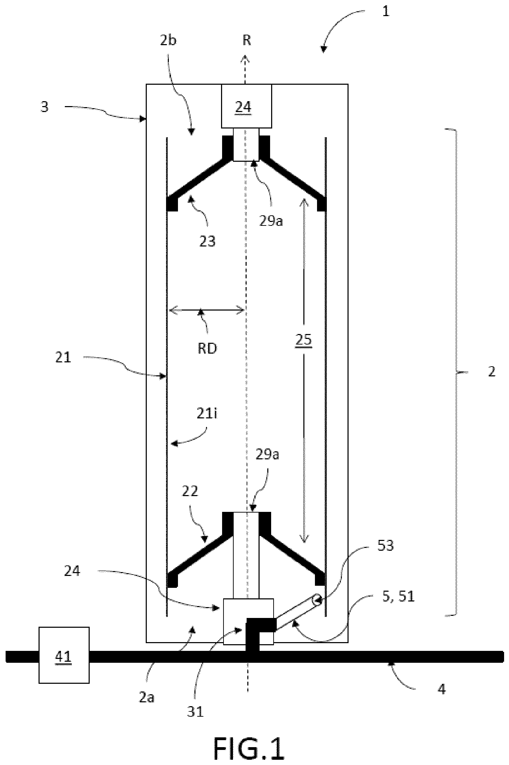

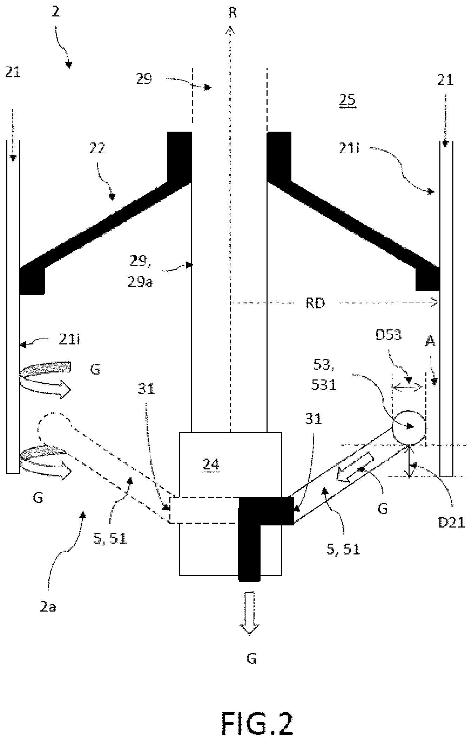

Fig.1 zeigt eine Ausführungsform des erfindungsgemäßen Vakuum-Rotorsystems 1 im seitlichen Schnitt, das hier einen hohlförmigen Rotor 2 mit einer zu beiden Enden 2a, 2b, einem ersten offenen Ende 2a und einem zweiten offenen Ende 2b, senkrecht zur Rotationsachse R offenen Rotormantelfläche 21 und mindestens zwei innerhalb der Rotormantelfläche 21 mit deren Innenseite 21i verbundenen Naben 22,23, die in entsprechenden Lagern 24 zur Rotation des Rotors 2 geeignet gelagert sind, umfasst. Hier wird die Nabe 22, die am ersten offenen Ende 2a angeordnet ist, auch als erste Nabe 22 bezeichnet. Entsprechend wird die Nabe 23, die am anderen offenen Ende 2b (dem zweiten offenen Ende 2b) angeordnet ist, auch als zweite Nabe 23 bezeichnet. Der hohlförmige Rotor 2 ist hier als zylinderförmiger Rotor mit einer zylinderförmigen Rotormantelfläche 21 ausgeführt, wobei die jeweiligen Deckelflächen der Zylinderform offen sind und damit die offenen Ende 2a und 2b darstellen. Der hier gezeigte Rotor ist vertikal aufgestellt und besitzt eine Rotationsachse senkrecht zum Erdboden. Insofern wird nachfolgend für vertikal angeordnete Rotoren die erste Nabe 22 auch als untere Nabe 22 (näher am Erdboden) und die zweite Nabe 23 als obere Nabe 23 (weiter von Erdboden entfernt als die erste bzw. untere Nabe 22) bezeichnet. In dieser Ausführungsform ist der Rotor 2 über die separat voneinander über jeweilige separate Zapfen 29a gelagerten Naben 22, 23 gelagert. In dieser Ausführungsform sind die Naben 22, 23 miteinander nur über die Rotormantelfläche 21 verbunden. In einer alternativen Ausführungsform könnten die Naben 22, 23 auch über einen den gesamten Rotor 2 durchlaufenen gemeinsamen Schaft 29 in den Lagern 24 gelagert sein. Für die Umdrehungszahlen von 50000 U/min sind dem Fachmann geeignete Lager bekannt. Der Rotor 2 wird dabei von einem Maschinengehäuse 3 mit mindestens einer Gasauslassöffnung 31 zum Auslassen von Gasen G aus dem Maschinengehäuse 3 heraus umschlossen, um Betriebssicherheit und Betriebsvakuumdruck BD zu gewährleisten. Für das Erzeugen eines Vorvakuums ist ein mit der Gasauslassöffnung 31 verbundenes Vakuumsystem 4 mit mindestens einer Vorpumpe 41 (z.B. Drehschieberpumpe) zur Erzeugung eines Vorvakuumdrucks VD im Maschinengehäuse 3 angeschlossen. Für die Erzeugung des Betriebsvakuumdrucks ist im Maschinengehäuse 3 zwischen der Nabe 22 und dem dazugehörigen offenen Ende 2a der Rotormantelfläche 21 mindestens eine Gasentnahmevorrichtung 5, 51 mit einer Gasentnahmeöffnung 53 in einem geeigneten Abstand A zu deren Innenseite berührungsfrei zur Rotormantelfläche 21 zur effektiven Aufnahme von Gas G angeordnete und mit der Gasauslassöffnung 31 zur Abfuhr des aufgenommenen Gases G verbunden. Die Gasauslassöffnung 31 bezeichnet dabei die Öffnung im Maschinengehäuse 3, durch die das Gas G im Maschinegehäuse 3 abgepumpt worden wäre, wenn nicht die Gasentnahmevorrichtung 5, 51 mit der Gasauslassöffnung 53 verbunden wäre. Mit Gasentnahmevorrichtung 5, 51 wird das durch sie bereits entnommene Gas G durch die Gasauslassöffnung 31 nun nach außerhalb des Maschinengehäuses 3 zum Vakuumsystem 4 transportiert. Dabei ist die Gasentnahmevorrichtung 5, 51 so angeordnet, dass der Rotor 2 bei einer Drehfrequenz größer 200Hz selbst einen Teil des sich durch die Rotordrehung entlang der Innenseite 21i der Rotormantelfläche 21 bewegenden Gasstroms G zumindest in die erste Gasentnahmevorrichtung 5, 51 fördert F und somit selbst einen Gasdruck im Maschinengehäuse 3 vom Vorvakuumdruck VD auf einen geringeren Betriebsvakuumdruck BD reduzieren kann. Die Gasentnahmevorrichtung 5, 51 erstreckt sich von der Gasauslassöffnung 31 beispielsweise als innen hohles Rohr in Richtung der Innenseite der Rotormantelfläche. Weitere Details zur Gasentnahmevorrichtung 5, 51 sind unter Fig.2 erläutert.

Fig.2 zeigt die eine Ausführungsform des erfindungsgemäßen Vakuum-Rotorsystems 1 gemäß Fig.1 als Vergrößerung für den Rotor 2 im Bereich der unteren Nabe 22. Als Gasentnahmevorrichtung 5 können grundsätzlich unterschiedlich geformte und ausgeführte Vorrichtungen verwendet werden, die einen für Gase G offenen inneren Kanal zwischen Gasentnahmeöffnung 53 und Gasauslassöffnung 31, 32 bereitstellen. Hierbei können je nach Ausführungsform eine oder mehrere Gasentnahmevorrichtungen 5 an dieselbe Gasauslassöffnung 31, 32 angeschlossen sein, sofern die Rotor- und Lagerausgestaltung eine Anordnung mehrere Gasentnahmevorrichtungen 5 auf derselben Seite, hier die Seite zugewandt zum offenen Ende 2a des Rotors 2, des Rotors 2 zulassen. In dieser Ausführungsform ist eine weitere Gasentnahmevorrichtung 5, 51 (gestrichelt gezeichnet) zu der bereits in Fig,.1 gezeigten Gasentnahmevorrichtung 5, 51 in derselben Ebene relativ zur Rotationsachse R zwischen erster (unterer) Nabe 22 und dem entsprechenden ersten offenen Ende 2a der Rotormantelfläche 21 (des Rotors 2) angeordnet. In anderen Ausführungsformen können beispielsweise auch vier oder mehr symmetrisch zueinander angeordneten Gasentnahmevorrichtungen 5 zwischen erster (unterer) Nabe 22 und dem entsprechenden ersten offenen Ende 2a der Rotormantelfläche 12 (des Rotors 2) angeordnet sein. Das Material der Gasentnahmevorrichtung 5 besteht aus einem vakuumtauglichen Material, beispielsweise Edelstahl, um lediglich eine geringe oder keine Eigenausgasung im Maschinengehäuse zu verursachen. Beispielsweise können als Gasentnahmevorrichtungen 5 Rohrverbindungen verwendet werden, die sich in radialer Richtung von der Gasauslassöffnung 53 gegebenenfalls in einem geeigneten, gegebenenfalls von 90 Grad abweichenden Winkel zur Rotationsachse R hin zur Rotormantelfläche 21 erstrecken und vor Erreichen der Rotormantelfläche 21 eine Krümmung aufweisen, sodass die offene Rohröffnung als Gasentnahmeöffnung 53 (wie hier bei der rechten Gasentnahmeöffnung gezeigt) senkrecht in dem Gasstrom G entlang der Innenseite 21i der Rohrmantelfläche 21 hinein ausgerichtet ist. Der Gasstrom entlang der Innenseite 21i der Rotormantelfläche 21 ist schematisch auf der linken Seite des Rotors durch die beiden gebogenen Pfeile G dargestellt. Die gestrichelte Gasentnahmevorrichtung 5, 51 besitzt ebenfalls eine senkrecht zum Gasstrom G in den Gasstrom G hinein ausgerichtete Gasentnahmeöffnung 53, die hier aufgrund der Ausrichtung nicht sichtbar ist (nach hinten gerichtet). Die Gasentnahmefläche 53 bezeichnet dabei die Fläche, die senkrecht zum Gasstrom G ausgerichtet ist. Die Gasentnahmeöffnung 53 kann dabei unterschiedliche Formen besitzen, beispielsweis runde, oval oder elliptische Formen. Zu kantige Formen können aufgrund von davon verursachten Verwirbelungen im Gasstrom G ungeignet sein. Der Abstand A zwischen der Gasaufnahmeöffnung 53 der ersten Gasentnahmevorrichtung 5, 51 und der Rotormantelfläche 21 beträgt hier weniger als 10% des Radius RD des zylinderförmigen Rotors 2 an dieser Stelle. In einer bevorzugten Ausführungsform beträgt der Abstand A zwischen 1 und 5% des Radius RD des Rotors 2 an dieser Stelle. Die Gasaufnahmeöffnung 53 besitzt dabei eine effektive Gasaufnahmefläche 531 mit einem mittleren Durchmesser D53 und ist senkrecht zum Gasstrom G entlang der Rotormantelfläche 21 ausgerichtet. Der mittlere Durchmesser D53 beträgt beispielsweise zwischen 3% und 10% des Radius RD des Rotors 2. Die erste Gasentnahmevorrichtung 5, 51 ist dabei in einer Distanz D21 zum offenen Ende der Rotormantelfläche 21 angeordnet, die mindestens das Dreifache des mittleren Durchmessers D53 beträgt, damit der ungestörte Gasstrom in die Gasentnahmevorrichtung strömen kann. Wäre die Distanz D21 kürzer, so würde zumindest ein Teil des Gasstroms G an der Kante der Rotormantelfläche 21 zum offenen Ende 2a hin verwirbelt bzw. an der Kante abfließen, was zu einer Reduzierung des in die Gasentnahmevorrichtung 5, 51 strömenden Gasstroms G führen würde. Dadurch könnte nicht der niedrigste mögliche Betriebsvakuumdruck mit dieser Anordnung erreicht werden.

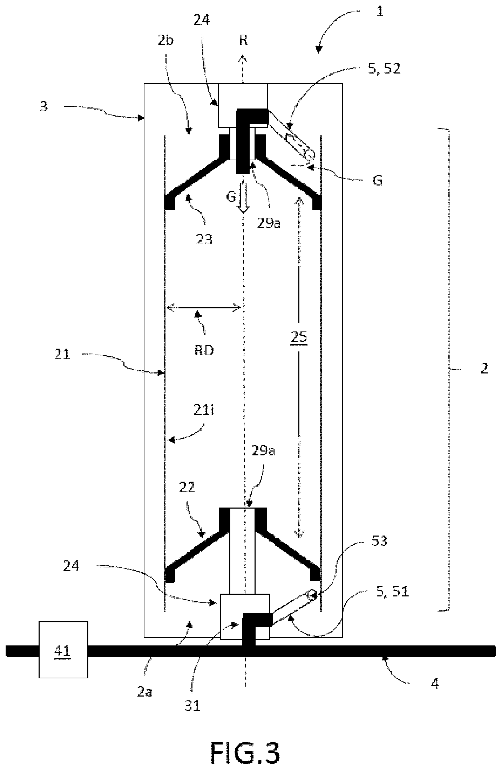

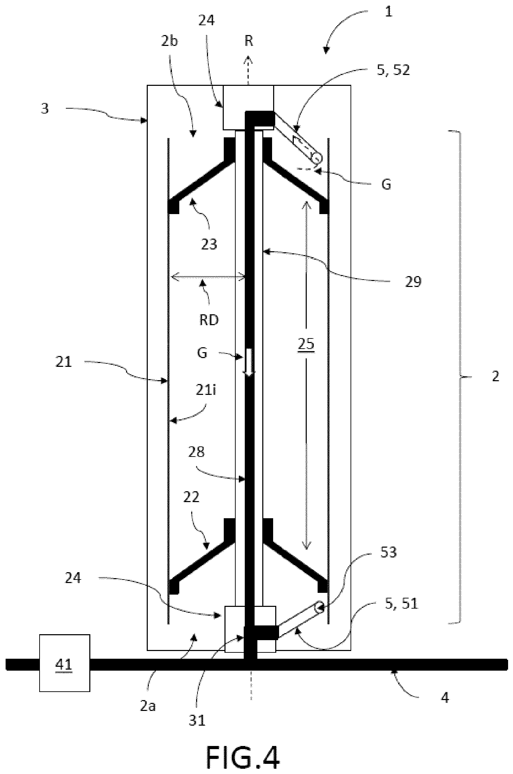

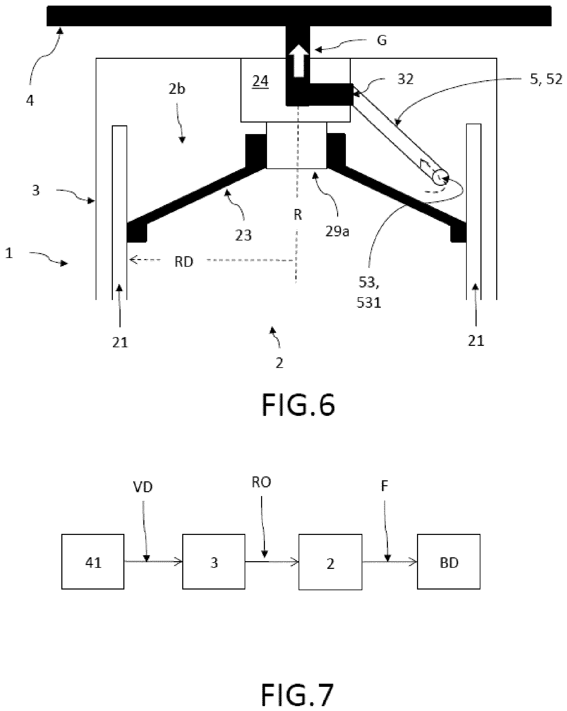

Fig.3 zeigt eine weitere Ausführungsform des erfindungsgemäßen Vakuum-Rotorsystems 1 im seitlichen Schnitt mit zusätzlicher zweiter Gasentnahmevorrichtung 5, 52. In dieser Ausführungsform ist eine zweite Gasentnahmevorrichtung 5, 52 zwischen der anderen Nabe 23 (zweite Nabe 23 oder obere Nabe 23) als bei der ersten Gasentnahmevorrichtung 5, 51 und einem entsprechend zu dieser zweiten Nabe 23 zugehörigen zweiten Ende 2b der Rotormantelfläche 21 in einem geeigneten Abstand A zur Innenseite 21i der Rotormantelfläche 21 berührungsfrei zur Rotormantelfläche 21 zur zusätzlichen Aufnahme von Gas G angeordnete. Hierbei definieren die Naben 22, 23 im hiergezeigten hohlförmigen zylinderförmigen Rotor 2 ein Zwischenvolumen 25 zwischen den Naben 22, 23, wobei die zweite Gasentnahmevorrichtung 5, 52 in dieser Ausführungsform so angeordnet ist, dass das aufgenommene Gas G in das Zwischenvolumen 25 gefördert wird. In dieser Ausführungsform sind die Naben 22, 23 gasundurchlässig zur Bildung eines gasdichten Zwischenvolumens 25 ausgestaltet, das als temporärer Zwischenspeicher für das aus dem Bereich des zweiten Endes des Rotors entfernten Gases G dient. Solange die Drehfrequenz des Rotors die erfindungsgemäßen selbstpumpende Wirkung besitzt, entweicht kein Gas aus dem Zwischenvolumen 25, dass aufgrund der Gasförderung in das Zwischenvolumen 25 herein einen höheren Druck ausweist als der Betriebsdruck BD des Rotors außerhalb des Zwischenvolumens 25. Vorzugsweise verläuft der gasführende Kanal zwischen der zweiten Gasentnahmevorrichtung 5, 52 und dem Zwischenvolumen 25 durch das obere Lager 24 und den Zapfen 29a hindurch. In dieser Ausführungsform ist der Rotor 2 über die separat voneinander über jeweilige separate Zapfen 29a gelagerten Naben 22, 23 gelagert. In dieser Ausführungsform sind die Naben 22, 23 miteinander nur über die Rotormantelfläche 21 verbunden. Der Fachmann ist in der Lage, den gasführenden Kanal zwischen zweiten Gasentnahmevorrichtung 5, 52 und Zwischenvolumen 25 geeignet zu gestalten. Für die zweite Gasentnahmevorrichtung 5, 52 können dieselben Anordnungen, Ausrichtungen, Abstände A, Distanzen D21 und mittleren Durchmesser D53 der Gasentnahmefläche 53 gewählt werden wie bei der ersten Gasentnahmevorrichtung 5, 51, siehe dazu auch Fig.2. Das gilt auch für die nachfolgenden Ausführungsbeispiele gemäß Fig.4 + 6. Für weitere Details wird auch auf die Figuren 1 und 2 verwiesen.

Fig.4 zeigt eine weitere Ausführungsform des erfindungsgemäßen Vakuum-Rotorsystems 1 im seitlichen Schnitt mit zusätzlicher zweiter Gasentnahmevorrichtung 5, 52 mit direkter Gasverbindung 28 zur Gasauslassöffnung 31 der ersten Gasentnahmevorrichtung 5, 51 als Variante zu der Ausführungsform wie in Fig.3 gezeigt. In der hier gezeigten Ausführungsform fördert die zweite Gasentnahmevorrichtung 5, 52 das aus dem Bereich zwischen der zweiten (oberen) Nabe 23 und dem offenen zweiten Ende 2b des Rotors 2 entnommene Gas G nicht in das Zwischenvolumen 25, sondern durch dieses Zwischenvolumen 25 hindurch zur ersten Gasauslassöffnung 31 zur Weiterleitung aus dem Maschinengehäuse 3 hinaus in das Vakuumsystem 4. Dabei ist die direkte Verbindung 28 zwischen zweiter Gasentnahmevorrichtung 5, 52 und Gasauslassöffnung 31 durch einen die beiden Naben 22, 23 verbindenden Schaft 29 geführt und an den Gaskanal zwischen ersten Gasauslassöffnung 31 und dem Vakuumsystem 4 in geeigneter Weise angeschlossen. Die direkte Verbindung hat dabei einen Querschnitt, der so gewählt ist, dass diese direkte Verbindung 28 in den Schaft 29 des Rotors 2 integriert werden kann.

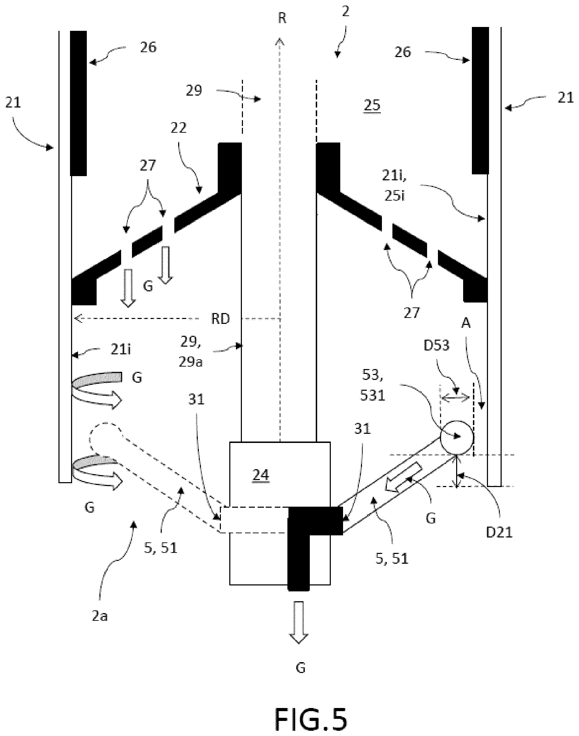

Fig.5 zeigt eine weitere Ausführungsform des erfindungsgemäßen Vakuum-Rotorsystems gemäß Fig.2 und 3 als Vergrößerung für den Rotor 2 im Bereich der unteren, hier gasdurchlässigen Nabe 22. Hierbei ist auf der Innenseite 25i des Zwischenvolumens 25 teilweise eine gasabsorbierende Schicht 26 angeordnet. Diese Schicht 26 absorbiert das sich im Zwischenvolumen 25 befindliche Gas, das beispielsweise durch die zweite Gasentnahmevorrichtung 5, 52 gemäß Fig. 3 in das Zwischenvolumen gefördert wird. Bei einem ansonsten gasdichten Zwischenvolumen 25 wird alleine dadurch der Gasdruck im Zwischenvolumen 25 selbst bei einer gasundurchlässigen unteren Nabe 22 reduziert. In dieser Ausführungsform ist allerdings zusätzlich die der zweiten Gasentnahmevorrichtung 5, 52 zugewandte Nabe 23 gasundurchlässig und die der ersten Gasentnahmevorrichtung 5, 51 zugewandte Nabe 22 (untere Nabe 22 oder erste Nabe 22) zumindest teilweise gasdurchlässig ausgestaltet, sodass das durch die zweite Gasentnahmevorrichtung 5, 52 in das Zwischenvolumen 25 geförderte Gas G durch die gasdurchlässig Nabe 22 in Richtung der ersten Gasentnahmevorrichtung (5, 51) entweichen kann. Damit kann die erste Gasentnahmevorrichtung 5, 51 auch das durch die zweite Gasentnahmevorrichtung 5, 52 aufgenommene Gas G über die Gasauslassöffnung 31 hindurch aus dem Maschinengehäuse 3 hinaus in das Vakuumsystem 4 abführen, was zu einem weiter sinkenden Betriebsvakuumdruck im Maschinegehäuse 3 führt. Weiter wird dadurch das Abpumpen der zwischengespeicherten Gasmenge bei niedriger Drehzahl verbessert. Die Gasdurchlässigkeit der ersten (unteren) Nabe 22 wird in dieser Ausführungsform durch eine Anzahl an Löchern 27 hergestellt, die vorzugsweise symmetrisch auf der Nabe 22 angeordnet sind.

Fig.6 zeigt eine weitere Ausführungsform des erfindungsgemäßen Vakuum-Rotorsystems 1 im seitlichen Schnitt mit zusätzlicher zweiter Gasentnahmevorrichtung 5, 52 und direktem Anschluss an eine zweite Gasauslassöffnung 32. Das Vakuum-Rotorsystem 1 umfasst hier eine weitere Gasauslassöffnung 32 an der der anderen Gasauslassöffnung 31 gegenüberliegenden Seite des Maschinengehäuses 3, zu der die zweite Gasentnahmevorrichtung 5, 52 zur Abfuhr des durch sie aufgenommenen Gases G)mit der weiteren Gasaufnahmeöffnung 32 verbunden ist, die wiederum an das Vakuumsystem 4 angeschlossen ist. Durch diese direkte Verbindung kann das durch die zweite Gasentnahmevorrichtung 5, 52 aufgenommene Gas G am effektivsten, weil auf dem kürzesten Weg, aus dem Maschinengehäuse 3 entfernt werden, was den Betriebsvakuumdruck weiter verringert.

Fig.7 zeigt eine Ausführungsform des erfindungsgemäßen Verfahrens zum Betreiben des Vakuum-Rotorsystems 1 umfassend die Schritte des Erzeugen eines Vorvakuumdrucks VD im Maschinengehäuse 3 mit einem mit der Gasauslassöffnung 31 verbundenen Vakuumsystem 4 mit mindestens einer Vorpumpe 41 und das Reduzieren des Drucks im Maschinengehäuse 3 von dem Vorvakuumdruck VD auf einen geringeren Betriebsvakuumdruck BD durch den Rotor 2 selbst mittels Rotieren RO, indem mindestens eine erste Gasentnahmevorrichtung 5, 51 mit einer Gasaufnahmeöffnung 53 zur effektiven Aufnahme von Gas G im Maschinengehäuse 3 zwischen der Nabe 22 und dem dazugehörigen offenen Ende 2a der Rotormantelfläche 21 in einem geeigneten Abstand A zu deren Innenseite 21i berührungsfrei zur Rotormantelfläche 21 angeordnet ist und mit der Gasauslassöffnung 31 zur Abfuhr des aufgenommenen Gases G verbunden ist, wobei der Rotor 2 bei einer Drehfrequenz größer 200Hz selbst einen Teil des sich durch die Rotordrehung entlang der Innenseite 21i der Rotormantelfläche 21 bewegenden Gasstroms G zumindest in die erste Gasentnahmevorrichtung 5, 51 fördert F.

Durch die in den Figuren 1 - 6 gezeigten Ausführungsformen lassen sich z.B. bei einem Betriebsvakuumdruck von 10⁻⁴ mbar am Pumpenanschlussflansch G Betriebsvakuumdrücke BD von 2*10⁻³ mbar im Bereich zwischen der oberen Nabe 23 und dem offenen (zweiten) Ende 2b des Rotors 2 erreichen. Im Vergleich dazu können mit Turbopumpen anstatt der erfindungsgemäßen Gasentnahmevorrichtung bei einem Betriebsvakuumdruck von 10⁻⁵ mbar am Pumpenanschlussflansch nur Betriebsvakuumdrücke von lediglich 10⁻² mbar auf der gegenüberliegenden Nabenseite erreicht werden, sodass das erfindungsgemäße Vakuum-Rotorsystem 1 nicht nur kostengünstiger, sondern auch vergleichbare Drücke bei besserer Druckverteilung erreicht werden können. Die hier gezeigten Ausführungsformen stellen nur Beispiele für die vorliegende Erfindung dar und dürfen daher nicht einschränkend verstanden werden.

### LISTE DER BEZUGSZEICHEN

- 1: Vakuum-Rotorsystem
- 2: Rotor
- 2a, 2b: (zwei) offene Enden des Rotors senkrecht zur Rotationsachse
- 21: Rotormantelfläche
- 21i: Innenseite der Rotormantelfläche
- 22: eine Nabe (erste Nabe, bzw. untere Nabe)
- 23: eine andere Nabe (zweite Nabe bzw. obere Nabe)
- 24: Lager, in denen die Naben gelagert sind
- 25: Zwischenvolumen im Rotor zwischen den Naben
- 25i: Innenseite des Zwischenvolumens
- 26: gasabsorbierende Schicht
- 27: Löcher in der gasdurchlässigen Nabe
- 28: direkte Verbindung zwischen zweiter Gasentnahmevorrichtung und Gasauslassöffnung 31
- 29: Schaft, der beide Naben verbindet
- 29a: Zapfen, der jeweils eine der Nabe mit dem Lager verbindet
- 3: Maschinengehäuse
- 31: (erste) Gasauslassöffnung
- 32: weitere (zweite) Gasauslassöffnung an der der anderen Gasauslassöffnung 31 gegenüberliegenden Seiten des Maschinegehäuses
- 4: Vakuumsystem
- 41: Vorvakuumpumpe im Vakuumsystem
- 5: Gasentnahmevorrichtung (erste oder zweite)
- 51: erste Gasentnahmevorrichtung
- 52: zweite Gasentnahmevorrichtung
- 53: Gasaufnahmeöffnung
- 531: Gasentnahmefläche
- A: Abstand zwischen Gasaufnahmeöffnung und Innenseite der Rotormantelfläche
- BD: Betriebsvakuumdruck
- D21: Distanz zwischen Gasentnahmevorrichtung und offenem Ende des Rotors
- D53: mittlerer Durchmesser der Gasentnahmefläche
- F: Fördern von Gas durch die Drehung des Rotors in die Gasentnahmevorrichtung
- G: Gas, Gasstrom
- R: Rotationsachse
- RD: Radius des Rotors
- RO: Rotieren des Rotors
- VD: Vorvakuumdruck

## Patentansprüche

1. Ein Vakuum-Rotorsystem (1) umfassend einen hohlförmigen Rotor (2) mit einer zu beiden Enden (2a, 2b) senkrecht zur Rotationsachse (R) offenen Rotormantelfläche (21) und mindestens zwei innerhalb der Rotormantelfläche (21) mit deren Innenseite (21i) verbundenen Naben (22,23), die in entsprechenden Lagern (24) zur Rotation des Rotors (2) geeignet gelagert sind, ein den Rotor (2) umschließendes Maschinengehäuse (3) mit mindestens einer Gasauslassöffnung (31) zum Auslassen von Gasen (G) aus dem Maschinengehäuse (3) heraus, ein mit der Gasauslassöffnung (31) verbundenes Vakuumsystem (4) mit mindestens einer Vorpumpe (41) zur Erzeugung eines Vorvakuumdrucks (VD) im Maschinengehäuse (3) sowie mindestens eine im Maschinengehäuse (3) zwischen der Nabe (22) und dem dazugehörigen offenen Ende (2a) der Rotormantelfläche (21) in einem geeigneten Abstand (A) zu deren Innenseite berührungsfrei zur Rotormantelfläche (21) zur effektiven Aufnahme von Gas (G) angeordnete und mit der Gasauslassöffnung (31) zur Abfuhr des aufgenommenen Gases (G) verbunden erste Gasentnahmevorrichtung (5, 51) mit einer Gasaufnahmeöffnung (53), die so angeordnet ist, dass der Rotor (2) bei einer Drehfrequenz größer 200Hz selbst einen Teil des sich durch die Rotordrehung entlang der Innenseite (21i) der Rotormantelfläche (21) bewegenden Gasstroms (G) zumindest in die erste Gasentnahmevorrichtung (5, 51) fördert (F) und somit selbst einen Gasdruck im Maschinengehäuse (3) vom Vorvakuumdruck (VD) auf einen geringeren Betriebsvakuumdruck (BD) reduzieren kann.

2. Das Vakuum-Rotorsystem (1) nach Anspruch 1,
**dadurch gekennzeichnet,**
**dass** der Abstand (A) zwischen der Gasaufnahmeöffnung (53) der ersten Gasentnahmevorrichtung (5, 51) und der Rotormantelfläche (21) weniger als 10% des Radius (RD) des Rotors (2) an dieser Stelle beträgt, bevorzugt beträgt der Abstand zwischen 1 und 5% des Radius (RD) des Rotors (2) an dieser Stelle.

3. Das Vakuum-Rotorsystem (1) nach Anspruch 1 oder 2,
**dadurch gekennzeichnet,**
**dass** die Gasaufnahmeöffnung (53) eine effektive Gasaufnahmefläche (531) mit einem mittleren Durchmesser (D53) umfasst und senkrecht zum Gasstrom (G) entlang der Rotormantelfläche (21) ausgerichtet ist.

4. Das Vakuum-Rotorsystem (1) nach Anspruch 3,
**dadurch gekennzeichnet,**
**dass** die erste Gasentnahmevorrichtung (5, 51) innerhalb der Rotormantelfläche (21) in einer Distanz (D21) zum offenen Ende der Rotormantelfläche (21) angeordnet ist, die mindestens das Dreifache des mittleren Durchmessers (D53) beträgt.

5. Das Vakuum-Rotorsystem (1) nach Anspruch 3 oder 4,
**dadurch gekennzeichnet,**
**dass** der mittlere Durchmesser (D53) zwischen 3% und 10% des Radius (RD) des Rotors (2) an dieser Stelle beträgt.

6. Das Vakuum-Rotorsystem (1) nach einem der voranstehenden Ansprüche,
**dadurch gekennzeichnet,**
**dass** die erste Gasentnahmevorrichtung (5, 51) einen Querschnitt parallel zum Gasstroms (G) entlang der Innenseiten (21i) der Rotormantelfläche (21) besitzt, der geeignet ist, um Verwirbelungen des Gasstroms (G) durch die erste Gasentnahmevorrichtung (5, 51) zu minimieren, vorzugsweise ist der Querschnitt rund oder oval.

7. Das Vakuum-Rotorsystem (1) nach einem der voranstehenden Ansprüche,
**dadurch gekennzeichnet,**
**dass** mindestens eine zweite Gasentnahmevorrichtung (5, 52) zwischen der anderen Nabe (23) als bei der ersten Gasentnahmevorrichtung (5, 51) und einem entsprechend zu dieser anderen Nabe (23) zugehörigen Ende (2b) der Rotormantelfläche (21) in einem geeigneten Abstand (A) zur Innenseite (21i) der Rotormantelfläche (21) berührungsfrei zur Rotormantelfläche (21) zur Aufnahme von Gas (G) angeordnete ist.

8. Das Vakuum-Rotorsystem (1) nach Anspruch 7,
**dadurch gekennzeichnet,**
**dass** die Naben (22, 23) im hohlförmigen Rotor (2) ein Zwischenvolumen (25) zwischen den Naben (22, 23) definieren, und die zweite Gasentnahmevorrichtung (5, 52) so angeordnet ist, dass das aufgenommene Gas (G) in das Zwischenvolumen (25) gefördert wird.

9. Das Vakuum-Rotorsystem (1) nach Anspruch 8,
**dadurch gekennzeichnet,**
**dass** die Naben (22, 23) gasundurchlässig zur Bildung eines gasdichten Zwischenvolumens (25) ausgestaltet sind, vorzugsweise ist auf der Innenseite (25i) des Zwischenvolumens (25) zumindest teilweise eine gasabsorbierende Schicht (26) angeordnet.

10. Das Vakuum-Rotorsystem (1) nach Anspruch 8,
**dadurch gekennzeichnet,**
**dass** die der zweiten Gasentnahmevorrichtung (5, 52) zugewandte Nabe (23) gasundurchlässig und die der ersten Gasentnahmevorrichtung (5, 51) zugewandte Nabe (22) zumindest teilweise gasdurchlässig ausgestaltet sind, sodass das durch die zweite Gasentnahmevorrichtung (5, 52) in das Zwischenvolumen (25) geförderte Gas (G) durch die gasdurchlässig Nabe (22) in Richtung der ersten Gasentnahmevorrichtung (5, 51) entweichen kann.

11. Das Vakuum-Rotorsystem (1) nach Anspruch 10,
**dadurch gekennzeichnet,**
**dass** die gasdurchlässige Nabe (22) eine symmetrische Anordnung von Löchern (27) zur Herstellung der Gasdurchlässigkeit umfasst.

12. Das Vakuum-Rotorsystem (1) nach Anspruch 7,
**dadurch gekennzeichnet,**
**dass** die zweite Gasentnahmevorrichtung (5, 52) direkt mit der Gasauslassöffnung (31) zur Abfuhr des durch die zweite Gasentnahmevorrichtung (5, 52) aufgenommenen Gases (G) verbunden ist.

13. Das Vakuum-Rotorsystem (1) nach Anspruch 12,
**dadurch gekennzeichnet,**
**dass** die direkte Verbindung (28) zwischen zweiter Gasentnahmevorrichtung (5, 52) und Gasauslassöffnung (31) durch einen die beiden Naben (22, 23) verbindenden Schaft (29) geführt ist.

14. Das Vakuum-Rotorsystem (1) nach Anspruch 7,
**dadurch gekennzeichnet,**
**dass** das Vakuum-Rotorsystem (1) eine weitere Gasauslassöffnung (32) an der der anderen Gasauslassöffnung (31) gegenüberliegenden Seite des Maschinengehäuses (3) umfasst, die zweite Gasentnahmevorrichtung (5, 52) zur Abfuhr des durch sie aufgenommenen Gases (G) mit der weiteren Gasaufnahmeöffnung (32) verbunden ist, die an das Vorvakuumsystem (4) angeschlossen ist.

15. Ein Schwungradenergiespeicher umfassend eine Mehrzahl an Vakuum-Rotorsysteme (1) nach Anspruch 1, wobei das Vakuumsystem (4) eines jeden Vakuum-Rotorsystems (1) zur Erzeugung eines Vorvakuumdrucks (VD) in jedem der Maschinegehäuse (3) zu einem gemeinsamen Energiespeicher-Vakuumsystem mit mindestens einer Vorvakuumpumpe (41) zusammengeschlossen ist, das den Vorvakuumdruck (VD) in jedem Maschinengehäuse (3) bereitstellt.

16. Verfahren zum Betrieben eines Vakuum-Rotorsystems (1) nach Anspruch 1 mit einem hohlförmigen Rotor (2) mit einer zu beiden Enden (2a, 2b) senkrecht zur Rotationsachse (R) offenen Rotormantelfläche (21) und mindestens zwei innerhalb der Rotormantelfläche (21) mit deren Innenseite (21i) verbundenen Naben (22, 23), die in entsprechenden Lagern (24) zur Rotation des Rotors (2) geeignet gelagert sind, und mit einem den Rotor (2) umschließenden Maschinengehäuse (3) mit mindestens einer Gasauslassöffnung (31) zum Auslassen von Gasen (G) aus dem Maschinengehäuse (3) heraus, umfassend die Schritte:
- Erzeugen eines Vorvakuumdrucks (VD) im Maschinengehäuse (3) mit einem mit der Gasauslassöffnung (31) verbundenen Vakuumsystem (4) mit mindestens einer Vorpumpe (41); und
- Reduzieren des Drucks im Maschinengehäuse (3) von dem Vorvakuumdruck (VD) auf einen geringeren Betriebsvakuumdruck (BD) durch den Rotor (2) selbst, indem mindestens eine erste Gasentnahmevorrichtung (5, 51) mit einer Gasaufnahmeöffnung (53) zur effektiven Aufnahme von Gas (G) im Maschinengehäuse (3) zwischen der Nabe (22) und dem dazugehörigen offenen Ende (2a) der Rotormantelfläche (21) in einem geeigneten Abstand (A) zu deren Innenseite (21i) berührungsfrei zur Rotormantelfläche (21) angeordnet ist und mit der Gasauslassöffnung (31) zur Abfuhr des aufgenommenen Gases (G) verbunden ist, wobei der Rotor (2) bei einer Drehfrequenz größer 200Hz selbst einen Teil des sich durch die Rotordrehung entlang der Innenseite (21i) der Rotormantelfläche (21) bewegenden Gasstroms (G) zumindest in die erste Gasentnahmevorrichtung (5, 51) fördert (F).

## Claims

1. Vacuum rotor system (1) comprising a hollow rotor (2) having a rotor lateral surface (21) that is open at both ends (2a, 2b) perpendicularly to the axis of rotation (R) and having at least two hubs (22, 23) that are connected inside the rotor lateral surface (21) to the inner face thereof (21i) and are suitably mounted in appropriate bearings (24) so that the rotor can rotate (2), comprising a machine housing (3) that encloses the rotor (2) and has at least one gas-outlet opening (31) for discharging gases (G) from the machine housing (3), comprising a vacuum system (4) that is connected to the gas-outlet opening (31) and has at least one pre-pump (41) for generating a pre-vacuum pressure (VD) in the machine housing (3), and comprising at least one first gas-removal device (5, 51), which is arranged in the machine housing (3) between the hub (22) and the associated open end (2a) of the rotor lateral surface (21) at a suitable distance (A) from the inner face thereof without contacting the rotor lateral surface (21) for effectively receiving gas (G), is connected to the gas-outlet opening (31) in order to conduct away the received gas (G) and has a gas-receiving opening (53), which is arranged such that, at a rotational frequency of greater than 200 Hz, the rotor (2) itself conveys (F) part of the gas flow (G) moving along the inner face (21i) of the rotor lateral surface (21) due to the rotor rotation at least into the first gas-removal device (5, 51) and thus itself can reduce a gas pressure in the machine housing (3) from the pre-vacuum pressure (VD) to a lower operating vacuum pressure (BD).

2. Vacuum rotor system (1) according to claim 1,
**characterised in that**
the distance (A) between the gas-receiving opening (53) of the first gas-removal device (5, 51) and the rotor lateral surface (21) is less than 10% of the radius (RD) of the rotor (2) at this point, and preferably the distance is between 1 and 5% of the radius (RD) of the rotor (2) at this point.

3. Vacuum rotor system (1) according to claim 1 or 2,
**characterised in that**
the gas-receiving opening (53) has an effective gas-receiving surface area (531) having an average diameter (D53) and is oriented perpendicularly to the gas flow (G) along the rotor lateral surface (21).

4. Vacuum rotor system (1) according to claim 3,
**characterised in that**
the first gas-removal device (5, 51) is arranged inside the rotor lateral surface (21) at a distance (D21) from the open end of the rotor lateral surface (21) which is at least three times the average diameter (D53).

5. Vacuum rotor system (1) according to claim 3 or 4,
**characterised in that**
the average diameter (D53) is between 3% and 10% of the radius (RD) of the rotor (2) at this point.

6. Vacuum rotor system (1) according to any of the preceding claims,
**characterised in that**
the first gas-removal device (5, 51) has a cross section parallel to the gas flow (G) along the inner faces (21i) of the rotor lateral surface (21) that is suitable for minimising turbulence of the gas flow (G) through the first gas-removal device (5, 51), and the cross section is preferably round or oval.

7. Vacuum rotor system (1) according to any of the preceding claims,
**characterised in that**
at least one second gas-removal device (5, 52) is arranged between the other hub (23) than for the first gas-removal device (5, 51) and an associated end (2b) of the rotor lateral surface (21) corresponding to this other hub (23) at a suitable distance (A) from the inner face (21i) of the rotor lateral surface (21) without contacting the rotor lateral surface (21) for receiving gas (G).

8. Vacuum rotor system (1) according to claim 7,
**characterised in that**
the hubs (22, 23) define an intermediate volume (25) between the hubs (22, 23) in the hollow rotor (2), and the second gas-removal device (5, 52) is arranged such that the received gas (G) is conveyed into the intermediate volume (25).

9. Vacuum rotor system (1) according to claim 8,
**characterised in that**
the hubs (22, 23) are designed to be impermeable to gas in order to form a gas-tight intermediate volume (25), and a gas-absorbing layer (26) is preferably arranged on the inner face (25i) of the intermediate volume (25) at least in part.

10. Vacuum rotor system (1) according to claim 8,
**characterised in that**
the hub (23) facing the second gas-removal device (5, 52) is designed to be impermeable to gas and the hub (22) facing the first gas-removal device (5, 51) is designed to be permeable to gas at least in part, such that the gas (G) conveyed through the second gas-removal device (5, 52) into the intermediate volume (25) can escape through the gas-permeable hub (22) towards the first gas-removal device (5, 51).

11. Vacuum rotor system (1) according to claim 10,
**characterised in that**
the gas-permeable hub (22) has a symmetrical arrangement of holes (27) for producing the gas permeability.

12. Vacuum rotor system (1) according to claim 7,
**characterised in that**
the second gas-removal device (5, 52) is directly connected to the gas-outlet opening (31) for discharging the gases (G) received by the second gas-removal device (5, 52).

13. Vacuum rotor system (1) according to claim 12,
**characterised in that**
the direct connection (28) between the second gas-removal device (5, 52) and the gas-outlet opening (31) extends through a shaft (29) connecting the two hubs (22, 23).

14. Vacuum rotor system (1) according to claim 7,
**characterised in that**
the vacuum rotor system (1) comprises an additional gas-outlet opening (32) on the side of the machine housing (3) opposite the other gas-outlet opening (31), and the second gas-removal device (5, 52) for discharging the gases (G) received thereby is connected to the additional gas-receiving opening (32), which is attached to the pre-vacuum system (4).

15. Flywheel energy storage device comprising a plurality of vacuum rotor systems (1) according to claim 1, wherein in order to generate a pre-vacuum pressure (VD) in each of the machine housings (3), the vacuum systems (4) of each vacuum rotor system (1) are combined to form a common energy storage device vacuum system comprising at least one vacuum pre-pump (41), which system provides the pre-vacuum pressure (VD) in each machine housing (3).

16. Method for operating a vacuum rotor system (1) according to claim 1 comprising a hollow rotor (2) having a rotor lateral surface (21) that is open at both ends (2a, 2b) perpendicularly to the axis of rotation (R) and having at least two hubs (22, 23) that are connected inside the rotor lateral surface (21) to the inner face thereof (21i) and are suitably mounted in appropriate bearings (24) so that the rotor can rotate (2), and comprising a machine housing (3) that encloses the rotor (2) and has at least one gas-outlet opening (31) for discharging gases (G) from the machine housing (3), comprising the steps of:
- generating a pre-vacuum pressure (VD) in the machine housing (3) using a vacuum system (4) that is connected to the gas-outlet opening (31) and has at least one pre-pump (41); and
- reducing the pressure in the machine housing (3) from the pre-vacuum pressure (VD) to a lower operating vacuum pressure (BD) by means of the rotor (2) itself by at least one first gas-removal device (5, 51) comprising a gas-receiving opening (53) for effectively receiving gas (G) being arranged in the machine housing (3) between the hub (22) and the associated open end (2a) of the rotor lateral surface (21) at a suitable distance (A) from the inner face (21i) thereof without contacting the rotor lateral surface (21) and is connected to the gas-outlet opening (31) in order to conduct away the received gas (G), wherein the rotor (2) itself, at a rotational frequency of greater than 200 Hz, conveys (F) part of the gas flow (G) moving along the inner face (21i) of the rotor lateral surface (21) due to the rotor rotation at least into the first gas-removal device (5, 51).

## Revendications

1. Système de rotor à vide (1) comprenant un rotor (2) de forme creuse avec une surface d'enveloppe de rotor (21) ouverte en direction des deux extrémités (2a, 2b) de manière perpendiculaire par rapport à l'axe de rotation (R) et au moins deux moyeux (22, 23) reliés à l'intérieur de la surface d'enveloppe de rotor (21) à son côté intérieur (21i), qui sont montés de manière adaptée dans des paliers (24) correspondants aux fins de la rotation du rotor (2), un carter de machine (3) entourant le rotor (2) avec au moins une ouverture de sortie de gaz (31) servant à faire sortie des gaz (G) hors du carter de machine (3), un système à vide (4) relié à l'ouverture de sortie de gaz (31) avec au moins une pompe primaire (41) servant à produire une pression de vide préliminaire (VD) dans le carter de machine (3) ainsi qu'au moins un premier dispositif de prélèvement de gaz (5, 51) disposé dans le carter de machine (3) entre le moyeu (22) et l'extrémité (2a) ouverte associée de la surface d'enveloppe de rotor (21) à une distance (A) adaptée par rapport à son côté intérieur sans contact par rapport à la surface d'enveloppe de rotor (21) pour recevoir de manière efficace du gaz (G) et relié à l'ouverture de sortie de gaz (31) aux fins de l'évacuation du gaz (G) reçu, avec une ouverture de réception de gaz (53), qui est disposée de telle sorte que le rotor (2) refoule (F) au moins dans le premier dispositif de prélèvement de gaz (5, 51) lui-même une partie du flux de gaz (G) se déplaçant du fait de la rotation de rotor le long du côté intérieur (21i) de la surface d'enveloppe de rotor (21) à une fréquence de rotation supérieure à 200 Hz et peut ainsi réduire lui-même une pression de gaz dans le carter de machine (3) de la pression de vide préliminaire (VD) sur une pression de vide de fonctionnement (BD) inférieure.

2. Système de rotor à vide (1) selon la revendication 1,
**caractérisé en ce**
**que** la distance (A) entre l'ouverture de réception de gaz (53) du premier dispositif de prélèvement de gaz (5, 51) et la surface d'enveloppe de rotor (21) est inférieure à 10 % du rayon (RD) du rotor (2) à cet emplacement, de préférence la distance est comprise entre 1 et 5 % du rayon (RD) du rotor (2) à cet emplacement.

3. Système de rotor à vide (1) selon la revendication 1 ou 2,
**caractérisé en ce**
**que** l'ouverture de réception de gaz (53) comprend une surface de réception de gaz (531) efficace avec un diamètre (D53) moyen et est orientée de manière perpendiculaire par rapport au flux de gaz (G) le long de la surface d'enveloppe de rotor (21).

4. Système de rotor à vide (1) selon la revendication 3,
**caractérisé en ce**
**que** le premier dispositif de prélèvement de gaz (5, 51) est disposé à l'intérieur de la surface d'enveloppe de rotor (21) à une distance (D21) par rapport à l'extrémité ouverte de la surface d'enveloppe de rotor (21), qui est au moins le triple du diamètre (D53) moyen.

5. Système de rotor à vide (1) selon la revendication 3 ou 4,
**caractérisé en ce**
**que** le diamètre (D53) moyen est compris entre 3 % et 10 % du rayon (RD) du rotor (2) à cet emplacement.

6. Système de rotor à vide (1) selon l'une quelconque des revendications précédentes,
**caractérisé en ce**
**que** le premier dispositif de prélèvement de gaz (5, 51) possède une section transversale de manière parallèle par rapport au flux de gaz (G) le long des côtés intérieurs (21i) de la surface d'enveloppe de rotor (21), qui est adaptée pour minimiser des turbulences du flux de gaz (G) à travers le premier dispositif de prélèvement de gaz (5, 51), de préférence la section transversale est ronde ou ovale.

7. Système de rotor à vide (1) selon l'une quelconque des revendications précédentes,
**caractérisé en ce**
**qu'**est disposé au moins un deuxième dispositif de prélèvement de gaz (5, 52) entre le moyeu (23) autre que pour le premier dispositif de prélèvement de gaz (5, 51) et une extrémité (2b) associée, de manière correspondante par rapport audit autre moyeu (23), de la surface d'enveloppe de rotor (21) à une distance (A) adaptée par rapport au côté intérieur (21i) de la surface d'enveloppe de rotor (21) sans contact par rapport à la surface d'enveloppe de rotor (21) pour recevoir du gaz (G).

8. Système de rotor à vide (1) selon la revendication 7,
**caractérisé en ce**
**que** les moyeux (22, 23) définissent dans le rotor (2) de forme creuse un volume intermédiaire (25) entre les moyeux (22, 23), et le deuxième dispositif de prélèvement de gaz (5, 52) est disposé de telle sorte que le gaz (G) reçu est refoulé dans le volume intermédiaire (25).

9. Système de rotor à vide (1) selon la revendication 8,
**caractérisé en ce**
**que** les moyeux (22, 23) sont configurés de manière imperméable aux gaz pour former un volume intermédiaire (25) étanche aux gaz, de préférence au moins en partie une couche (26) à absorption de gaz est disposée sur le côté intérieur (25i) du volume intermédiaire (25).

10. Système de rotor à vide (1) selon la revendication 8,
**caractérisé en ce**
**que** le moyeu (23) tourné vers le deuxième dispositif de prélèvement de gaz (5, 52) est configuré de manière imperméable aux gaz et le moyeu (22) tourné vers le premier dispositif de prélèvement de gaz (5, 51) est configuré au moins en partie de manière perméable aux gaz si bien que le gaz (G) refoulé par le deuxième dispositif de prélèvement de gaz (5, 52) dans le volume intermédiaire (25) peut s'échapper par le moyeu (22) perméable aux gaz en direction du premier dispositif de prélèvement de gaz (5, 51).

11. Système de rotor à vide (1) selon la revendication 10,
**caractérisé en ce**
**que** le moyeu (22) perméable aux gaz comprend un ensemble symétrique de trous (27) servant à établir la perméabilité aux gaz.

12. Système de rotor à vide (1) selon la revendication 7,
**caractérisé en ce**
**que** le deuxième dispositif de prélèvement de gaz (5, 52) est relié directement à l'ouverture de sortie de gaz (31) servant à l'évacuation du gaz (G) reçu par le deuxième dispositif de prélèvement de gaz (5, 52).

13. Système de rotor à vide (1) selon la revendication 12,
**caractérisé en ce**
**que** la liaison (28) directe entre un deuxième dispositif de prélèvement de gaz (5, 52) et l'ouverture de sortie de gaz (31) est guidée par une tige (29) reliant les deux moyeux (22, 23).

14. Système de rotor à vide (1) selon la revendication 7,
**caractérisé en ce**
**que** le système de rotor à vide (1) comprend une ouverture de sortie de gaz (32) supplémentaire au niveau du côté, faisant face à l'autre ouverture de sortie de gaz (31), du carter de machine (3), le deuxième dispositif de prélèvement de gaz (5, 52) servant à l'évacuation du gaz (G) qu'il reçoit est relié à l'ouverture de réception de gaz supplémentaire (32), qui est raccordée au système à vide préliminaire (4).

15. Accumulateur d'énergie à volant d'inertie comprenant une multitude de systèmes de rotor à vide (1) selon la revendication 1, dans lequel le système à vide (4) d'un système de rotor à vide (1) respectif servant à produire une pression de vide préliminaire (VD) dans chaque carter de machine (3) est regroupé avec au moins une pompe à vide primaire (41) pour former un système à vide d'accumulateur d'énergie commun, qui fournit la pression de vide préliminaire (VD) dans chaque carter de machine (3).

16. Procédé servant à faire fonctionner un système de rotor à vide (1) selon la revendication 1 avec un rotor (2) de forme creuse avec une surface d'enveloppe de rotor (21) ouverte en direction des deux extrémités (2a, 2b) de manière perpendiculaire par rapport à l'axe de rotation (R) et au moins deux moyeux (22, 23) reliés à l'intérieur de la surface d'enveloppe de rotor (21) à son côté intérieur (21i), qui sont montés de manière adaptée dans des paliers (24) correspondants aux fins de la rotation du rotor (2), et avec un carter de machine (3) entourant le rotor (2) avec au moins une ouverture de sortie de gaz (31) servant à faire sortir des gaz (G) hors du carter de machine (3), comprenant les étapes :
- de production d'une pression de vide préliminaire (VD) dans le carter de machine (3) avec un système à vide (4) relié à l'ouverture de sortie de gaz (31) avec au moins une pompe primaire (41) ; et
- de réduction de la pression dans le carter de machine (3) de la pression de vide préliminaire (VD) sur une pression de vide de fonctionnement (BD) inférieure par le rotor (2) lui-même en ce qu'au moins un premier dispositif de prélèvement de gaz (5, 51) avec une ouverture de réception de gaz (53) servant à la réception efficace de gaz (G) est disposé dans le carter de machine (3) entre le moyeu (22) et l'extrémité (2a) ouverte associée de la surface d'enveloppe de rotor (21) à une distance adaptée (A) par rapport à son côté intérieur (21i) sans contact par rapport à la surface d'enveloppe de rotor (21) et est relié à l'ouverture de sortie de gaz (31) servant à l'évacuation du gaz (G) reçu, dans lequel le rotor (2) refoule (F) au moins dans le premier dispositif de prélèvement de gaz (5, 51) lui-même une partie du flux de gaz (G) se déplaçant du fait de la rotation de rotor le long du côté intérieur (21i) de la surface d'enveloppe de rotor (21) à une fréquence de rotation supérieure à 200 Hz.
